# EUROPEAN PATENT SPECIFICATION

(11) **EP 1 926 770 B1**
(45) Date of publication and mention of the grant of the patent: **19.06.2013**
(21) Application number: 06793574.2
(22) Date of filing: 18.09.2006
(51) Int. Cl.: C08K 5/3435

(54) **COLOR FAST POLYURETHANES**
FARBECHTE POLYURETHANE
POLYURETHANES A COULEUR SOLIDE

(30) Priority: 23.09.2005 US 720094 P
(43) Date of publication of application: 04.06.2008
(73) Proprietor: Ciba Holding Inc., 4057 Basel (CH)
(72) Inventor: KANOUNI, Mouhcine, New York, New York 10030 (US); FAGOURI, Christopher John, Chester, New York 10918 (US)
(86) International application number: PCT/EP2006/066431
(87) International publication number: WO 2007/039434

(56) References cited:
- EP-A2- 0 612 747
- DATABASE WPI Week 199934 Derwent Publications Ltd., London, GB; AN 1999-400317 XP002406192 & JP 11 158368 A (YOKOHAMA RUBBER CO LTD) 15 June 1999 (1999-06-15)
- GERLOCK, J. L. ET AL: "Determination of active HALS in automotive paint systems. Part II: HALS distribution in weathered clearcoat/basecoat paint systems" POLYMER DEGRADATION AND STABILITY , 73(2), 201-210 CODEN: PDSTDW; ISSN: 0141-3910, vol. 69, 2001, pages 1-9, XP002406190

## Description

Color fast thermoplastic polyurethane compositions comprising an effective amount of a combination of an ultraviolet light absorber and a compound containing at least one nitroxyl moiety and a method for maintaining the color fastness of thermoplastic polyurethane compositions by incorporating said ultraviolet light absorber and nitroxyl containing compound into a thermoplastic polyurethane composition are provided.

Commercial applications of thermoplastic polyurethane (also referred to as TPU) continue to grow at a rapid pace. Unlike thermoset polyurethanes, thermoplastic polyurethanes can be processed in a manner similar to other thermoplastic polymers in operations such as extrusion, injection molding, wire coating, etc. In addition to its desirable processability, TPU finds applicability in a wide variety of end use applications because of its optimum combination of performance properties.

For example, TPU is desirable because of its hardness, tensile strength, modulus, flexibility, and/or tensile elongation. The combination of such physical properties and a ready adaptability to a wide variety of processing and molding parameters renders TPU valuable in numerous end use applications, especially in many consumer goods.

Thermoplastic polyurethanes as used herein are well known items of commerce and descriptions thereof can be found in, for example, US Pat. 5,908,894; 5,785,916; 5,780,573; 5,254,641; 5,173, 543, (each of the preceding patents incorporated herein in their entirety by reference), the references therein and in a myriad of technical and commercial publications.

As a result of its use in consumer goods, in addition to optimum processing and performance properties, commercially desirable TPU formulations must be visually appealing, and maintain desirable visual characteristics over the lifetime of the part.

Typical processing temperatures can reach 380°F to 420°F (up to 240 °C) and often result in a light yellow or dull appearance of the final TPU containing product.

It will be appreciated that a yellowed or dulled appearance is detrimental, and in many consumer and automotive applications, unacceptable.

Non-thermoplastic polyurethanes, for example, foams, coatings, cast or injection molded articles etc, usually are not subjected to the rigorous processing conditions encountered with TPU. Typically, non-thermoplastic urethanes are formed in the processing step as in, for example, cast or injection molding where the urethane polymer is produced in the mold directly yielding an article with a selected shape. However, there are instances where elastomeric and even cross linked polyurethanes are subjected to further processing. Molded urethane articles are also frequently heated after initial formation, either in the mold or without.

Once a heat stable TPU composition has been achieved, the visually pleasing appearance of the TPU containing product must be maintained over the lifetime of the final product. Upon exposure to light, particularly ultraviolet light, the product must not exhibit yellowing, dulling, chalking, whitening, or blushing. Light induced discoloration is more pronounced with aromatic TPUs.

For a variety of aesthetic and functional reasons, TPUs that are colored, e.g. pigmented or dyed, have great economic value. With colored polymers, the impact of yellowing, dulling, whitening, or blushing is manifested by a noticeable shift in original color.

Color fastness is the property by which a substrate maintains a consistent color upon exposure to weathering conditions. A substrate is said to have "good color fastness" or "a high degree of color fastness" when the color of that substrate changes very little over time upon exposure to heat, light and other environmental stresses. Poor color fastness is manifested in several measurable ways including color fade, production of a darker color, increased yellowing, change of hue etc.

It is therefore desirable to provide a TPU composition with optimum processing and performance characteristics, heat stability, resistance to UV degradation and which maintains a consistent color throughout it service lifetime. Such a TPU composition would be particularly desirable for use in consumer and automotive applications.

Accordingly, the prior art has long sought such a TPU composition.

As with many polymer systems, the use of light stabilizers, e.g., hindered amine light stabilizers (HALS) and Ultraviolet Light Absorbers (UVAs), to protect thermoplastic polyurethane and other urethane polymers is well known. Most frequently, the HALS component is a derivative of 2,2,6,6-tetramethylpiperidine substituted on the hindered nitrogen at the 1 position by hydrogen, alkyl, and alkoxy. N-acyl substitution is also known.

2,2,6,6-tetramethylpiperidine derivatives bearing hydroxyl (hydroxylamines) or oxy atom substitution (nitroxyls or nitroxy radicals) on the hindered nitrogen are also known and frequently display properties not always seen with more traditional N-H, N-alkyl or N-alkoxy HALS. Nitroxyl derivatives of 2,2,6,6-tetramethylpiperidine are used in WO 2003085039 as part of a flame retardant composition; JP 11158368 (Abstract) discloses using nitroxides to aid in the room temperature storage of silane/urethane sealants; JP 2001011328 (Abstract) discloses a metal/polyphosphonic acid/nitroxyl combination for use in radically curable coating with good storage stability.

US Pat 5,785,916, incorporated herein in its entirety by reference, discloses a process for improving the UV and heat stability of thermoplastic polyurethanes by incorporating into a polyurethane composition one or more acrylate based rubbers and one or more UV and/or heat stabilizers. Preferably the stabilizers are specific benzotriazole UV absorbers but hindered amine light stabilizers may also be employed.

US Pat. 6,767,940 discloses the use of stable free radicals including nitroxyl compounds such as derivatives of 2,2,6,6-tetramethylpiperidyloxy to extend scorch time in elastomers including among others, polyurethanes, preferably elastomers comprising containing at least 40 phr polybutadiene.

US 6,194,509 discloses the use of stable free radicals such as derivatives of 2,2,6,6-tetramethylpiperidyloxy to trap radicals produced in vulcanizable elastomeric compositions.

JP 59102950 (Abstract) discloses a polyurethane composition with good whiteness stability comprising a nitroxyl radical incorporated into a urethane polymer as part of a chain terminator or end capping agent.

U.S. Pat. Appl. Nos. 10/512,528 filed April 24, 2003 and 10/970,112 filed October 21, 2004, which are incorporated herein in their entirety by reference, teach stabilization of body care products, household products, textiles and fabrics with hindered nitroxyls, sterically hindered hydroxyl amines and hydroxyl amine salts and with dialkylhydroxylamines or substituted dialkylhydroxylamines or their salts.

JP 2002234996 discloses improving the weatherability of urethane resins by incorporating urethanes or esters containing nitroxyl units derived from 1-oxo-2,2,6,6-tetramethylpiperidine.

It has been found that the addition of certain 2,2,6,6-tetremethylpiperidine nitroxyl containing compounds along with an ultraviolet light absorber to thermoplastic polyurethane compositions provides a pronounced improvement in color fastness upon exposure to light of the resulting TPU composition. The TPU compositions of the present invention are more color fast than thermoplastic polyurethane compositions comprising an ultraviolet light absorber and, instead of a nitroxyl containing compound, a similar N-H, N-alkyl, N-alkoxy, N-acyl hindered amine light stabilizer or hindered hydroxylamine.

This invention provides a method for preserving the color fastness of thermoplastic polyurethane compositions which method comprises incorporating into a thermoplastic polyurethane composition by extrusion carried out at a temperature between 140 and 250°C and an amount from 0.2 to 5.1 weight 1 based on the total weight of the thermoptastic polyurethane composition of a mixture of an ultraviolet light absorber and a compound containing at least one nitroxyl moiety of formula I 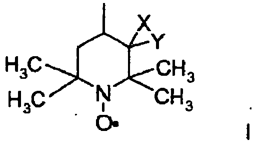 wherein X and Y are either H or together form a double bond to oxygen, typically X and Y are H, the amount being effective to produce a change in color as measured by delta E of less than 5 after 2,500 kJ of Xenon exposure according to SAE J 1960 test protocol.

Also provided is a method for preserving the color fastness of thermoplastic polyurethane compositions which method comprises incorporating into a thermoplastic polyurethane composition by extrusion carried out at a temperature between 140 and 250°C and an amount from 0.2 to 5.1 weight 1 based on the total weight of the thermoplastic polyurethane composition of a mixture of an ultraviolet light absorber and a compound containing at least one nitroxyl moiety of formula I, the amount being effective to produce a change in color as measured by delta E of less than 3 after 1,250 kJ of Xenon exposure according to SAE J 1885 test protocol.

UVAs include, but are not limited to, hydroxyphenylbenzotriazoles, benzophenones, benzoxazones, α-cyanoacrylates, oxanilides, tris-aryl-s-triazines, formamidines, cinnamates, malonates, benzilidenes, salicylate and benzoate UVAs and resorcinol and phenol esters of terephthalic and isophthalic acid. Specific examples are given herein later.

The term "effective amount" in reference to the additives is that amount that results in the desired effect regarding color fastness. The rate at which different polyurethane compositions discolor or experience color fade varies greatly. Therefore, the effective amount of ultra violet light absorber (also referred to herein as UVA) and compound containing at least one nitroxyl moiety of formula I (also referred to herein as "nitroxyl compounds" or "nitroxyls") will vary depending on a variety of factors including the chemical composition of the thermoplastic polyurethane, whether aromatic polymers are present, the types of colorants and other additives present, processing conditions, the thickness and clarity of the thermoplastic polyurethane article ultimately produced and the end use envisioned.

In general the UVA is present in an amount from 0.1 to 5 weight % based on the total weight of the thermoplastic polyurethane composition and is selected from the group consisting of 2-(2-hydroxyphenyl)-2H-benzotriazoles, tris-aryl-o-hydroxyphenyl-s-triazines, 2-hydroxybenzophenones, formamidines and oxanilides,
and the compound containing at least one nitroxyl moiety of formula I is present in an amount from 0.1 to 5 weight % based on the total weight of the thermoplastic polyurethane composition.

Typically the total amount of UVA and compound containing at least one nitroxyl moiety of formula I together is present in an amount from 0.2 to 5.1 weight % based on the total weight of the thermoplastic polyurethane composition.
For example the total amount of UVA and compound containing at least one nitroxyl moiety of formula I together is present in an amount from 0.2 to 2 weight % based on the total weight of the thermoplastic polyurethane composition.

Determining the optimum effective amount of UVA and nitroxyl will require only such experimentation as is common in the art.

Nitroxyls are, for example, compounds of formula la, 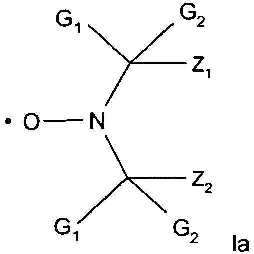 where
G₁ and G₂ are independently H, alkyl of 1 to 24 carbon atoms or are together pentamethylene and
Z₁ and Z₂ are each H or methyl, or Z₁ and Z₂ together form a linking moiety which may additionally be substituted by an ester, ether, hydroxy, oxo, cyanohydrin, amide, amino, carboxy or urethane group.

Nitroxyls of the above generic description can be formed from almost any of the widely known hindered amine light stabilizers, however, nitroxyls are free radicals and are generally colored compounds, typically orange or red.

The nitroxyls of the present invention are colored compounds containing at least one moiety of formula I.

For example the compound containing at least one nitroxyl moiety of formula I is selected from the group consisting of compounds of formulae A to F, 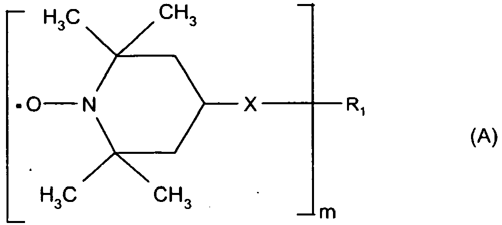 X is a direct bond, an oxygen atom or a group 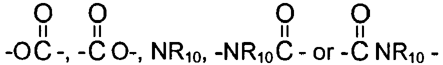 m is 1, 2, 3 or 4 and
when m is 1
R₁ is hydrogen, alkyl of 1 to 18 carbon atoms, alkenyl of 2-18 carbon atoms, alkynyl of 2-18 carbon atoms, cycloalkyl of 5 to 12 carbon atoms, said alkyl, alkenyl, alkynyl or cycloalkyl substituted one or more times by one or more OR₃, phenyl, NR₃R₃', COOR₃, COOM+, CONR₃R₃';
Alkyl of 2 to 18 carbon atoms substituted by oxirane;
aryl of 6 to 12 carbon atoms, said aryl substituted by one to four alkyl groups of 1 to 4 carbon atoms, OR₃, NR₃R₃', COOR₃, COOM+, CONR₃R₃';
alkyl of 2 to 18 carbon atoms, alkenyl of 3-18 carbon atoms, alkynyl of 3-18 carbon atoms or cycloalkyl of 5 to 12 carbon atoms interrupted one or more times by one or more groups X as defined above, said interrupted alkyl, alkenyl, alkynyl or cycloalkyl substituted one or more times by one or more OR₃, phenyl, NR₃R₃', COOR₃, COOM+, CONR₃R₃';
where R₃ and R₃' are independently of each other hydrogen, alkyl of 1 to 18 carbon atoms, alkyl of 1 to 18 carbon atoms interrupted one or more times by oxygen, cycloalkyl of 5 to 12 carbon atoms, aryl of 6 to 12 carbon atoms, said aryl substituted by one to four alkyl of 1 to 4 carbon atoms, aralkyl of 7-12 carbon atoms, or alkylcarbonyl of 2 to 18 carbon atoms, cycloalkylcarbonyl of 6 to 13 carbon atoms, arylcarbonyl of 7 to 13 carbon atoms, said aryl substituted by one to four alkyl of 1 to 4 carbon atoms
and M+ is a metal ion from the 1st, 2nd or 3rd group of the periodic table or is Zn, Cu, Ni or Co, or M is a group Nⁿ⁺(R₂)₄ where R₂ is alkyl of 1 to 8 carbon atoms or benzyl;
when m is 2,
R₁ is alkylene of 1 to 12 carbon atoms, alkenylene of 2 to 12 carbon atoms, cycloalkylene of 5 to 12 carbon atoms, aralkylene of 7 to 15 carbon atoms or arylene of 6 to 12 carbon atoms, alkylene of 2 to 12 carbon atoms interrupted one or more times by one or more O, -NR₃ -, -CONR₃ -, -COO-,
and when m is 2 and X is a direct bond
R₁ is -N(R₃)R₄N(R₃)- where R₄ is alkylene of 2 to 18 carbon atoms, cycloalkylene of 5 to 12 carbon atoms, aralkylene of 8 to 15 carbon atoms or arylene of 6 to 12 carbon atoms or R₁ is -COO- or -NH-CO-NH-;
when m is 3,
R₂ is alkanetriyl of 3 to 8 carbon atoms or benzenetriyl, and
when m is 4,
R₂ is alkanetetrayl of 5 to 8 carbon atoms or benzenetetrayl: 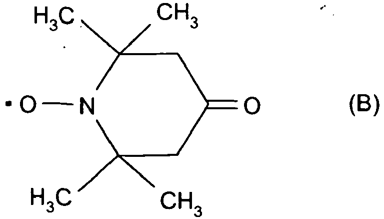 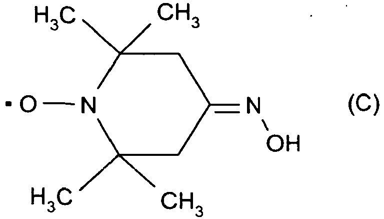 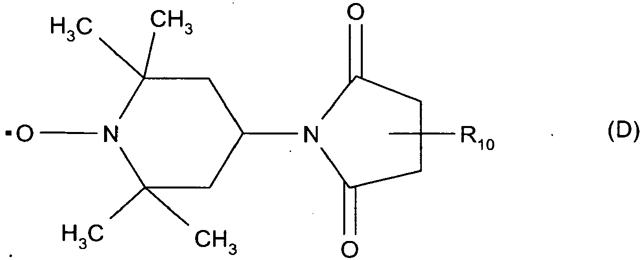
R₁₀ is hydrogen, alkyl of 1 to 18 carbon atoms, cycloalkyl of 5 to 12 carbon atoms, aralkyl of 7 to 15 carbon atoms, alkanoyl of 2 to 18 carbon atoms, alkenoyl of 3 to 5 carbon atoms or benzoyl: 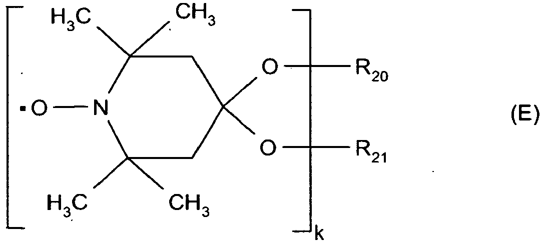 wherein k is 1 or 2,
when k is 1,
R₂₀ and R₂₁ are independently alkyl of 1 to 12 carbon atoms, alkenyl of 2 to 12 carbon atoms or aralkyl of 7 to 15 carbon atoms, or
R₂₀ and R₂₁ together are alkylene of 2 to 8 carbon atoms or said alkylene substituted by hydroxyl, or are acyloxy-alkylene of 4 to 22 carbon atoms, or
when k is 2,
R₂₀ and R₂₁ are together (-CH₂)₂C(CH₂-)₂: 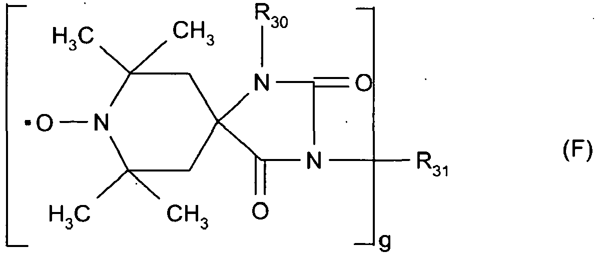
   R₃₀ is hydrogen, alkyl of 1 to 18 carbon atoms, benzyl, glycidyl, or alkoxyalkyl of 2 to 6 carbon atoms,
   g is 1 or 2,
when g is 1, R₃₁ is hydrogen, alkyl of 1 to 18 carbon atoms, alkenyl of 2-18 carbon atoms, propargyl, glycidyl, alkyl of 2 to 50 carbon atoms interrupted by one to twenty oxygen atoms, said alkyl substituted by one to ten hydroxyl groups or both interrupted by said oxygen atoms and substituted by said hydroxyl groups, or
R₃₁ is alkyl of 1 to 4 carbon atoms substituted by a carboxy group or by -COOZ where Z is hydrogen, alkyl of 1 to 4 carbon atoms or phenyl, or where Z is said alkyl substituted by - (COO⁻)ₙ Mⁿ⁺ where n is 1-3 and M is a metal ion from the 1 st, 2nd or 3rd group of the periodic table or is Zn, Cu, Ni or Co, or M is a group Nⁿ⁺(R₂)₄ where R₂ is alkyl of 1 to 8 carbon atoms or benzyl,
when g is 2, R₃₁ is alkylene of 1 to 12 carbon atoms, alkenylene of 4 to 12 carbon atoms, xylylene or alkylene of 1 to 50 carbon atoms interrupted by one to twenty oxygen atoms, substituted by one to ten hydroxyl groups or both interrupted by said oxygen atoms and substituted by said hydroxyl groups.

For example the compound containing at least one nitroxyl moiety of formula I is selected from the group consisting of compounds of formulae A, B, C and D,
wherein, in formula A
X is a an oxygen atom, 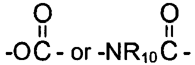 m is 1 or 2 and
when m is 1
R₁ is hydrogen, alkyl of 1 to 18 carbon atoms, alkenyl of 2-18 carbon atoms, said alkyl or alkenyl substituted one or more times by one or more OR₃, COOR₃ or CONR₃R₃';
Alkyl of 3 to 12 carbon atoms substituted by oxirane;
alkyl of 2 to 18 carbon atoms interrupted one or more times by one or more oxygen atoms or groups 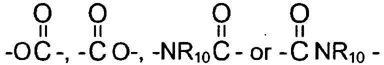 or said interrupted alkyl substituted one or more times by one or more OR₃, COOR₃, CONR₃R₃';
when m is 2,
R₁ is alkylene of 1 to 12 carbon atoms, alkylene of 2 to 12 carbon atoms interrupted one or more times by one or more O, -CONR₃-, -COO-, and or substituted one or more times by OR₃.

For example, the nitroxyl compounds of the instant invention are selected from
bis(1-oxyl-2,2-6-6-tetramethylpiperidin-4-yl) sebacate;
1-oxyl-2,2,6,6-tetramethyl-4-acetamidopiperidine;
1-oxyl-2,2,6,6-tetramethyl-4-oxo-piperidine;
1-oxyl-2,2,6,6-tetramethyl-4-methoxy-piperidine;
1-oxyl-2,2,6,6-tetramethyl-4-acetoxypiperidine;
1-oxyl-2,2,6,6-tetramethyl-4-propoxy-piperidine,
1-oxyl-2,2,6,6-tetramethyl-4-propanoyloxy-piperidine
1-oxyl-2,2,6,6-tetramethyl-4-stearoyloxy-piperidine and
1-oxyl-2,2,6,6-tetramethyl-4-hydroxypiperidine.

More than one UVA may be used together. More than one nitroxyl compound may be used together.

The present ultraviolet light absorbers and nitroxyl containing compounds are incorporated by using standard techniques, where required at elevated temperature. The UVA and nitroxyl can be added together or in separately. For example, the UVA and nitroxyl are incorporated via extrusion, blending, emulsification, solution casting, brabender mixing etc.

The thermoplastic urethane polymers of the inventive compositions are known and may be linear, branched or cross linked.

In preparing the compositions of this invention, it is possible within the scope of the invention to add the ultraviolet light absorber and/or nitroxyl containing compound to a polyol or isocyanate precursor of a polyurethane, however, the ultraviolet light absorber and nitroxyl containing compound are typically added to a thermoplastic urethane polymer, although polyols and/or isocyanates may be additionally present.

For example, the ultraviolet light absorber and nitroxyl containing compound are blended with thermoplastic polyurethane resin and other optional additives and to create a mixture which is extruded at elevated temperatures, for example, the extrusion is carried out at temperatures between 140°C and 250°C; for example the extrusion is carried out at temperatures between 160°C and 240°C; for example the extrusion is carried out at temperatures between 170°C and 220 °C.

The thermoplastic polyurethane compositions of the present invention may be subjected to additional processing, including heat, mechanical and chemical processing after incorporation of the ultraviolet light absorber and nitroxyl containing compound.

For example, the thermoplastic polyurethane compositions may be further processed after incorporation of the UVA and nitroxyl containing compound at elevated temperatures, for example at temperatures greater than 45°C or temperatures greater than 70°C.

The present thermoplastic polyurethane compositions may exist in any processed form including a sheet, plaque, pellet, other molded article, fiber, film, powder etc.

The color fast thermoplastic polyurethane compositions of the present invention may form a layer of a multilayered object by, for example, applying a melt of the present polyurethane compositions to the surface of an existing article. A multi layered article containing the present thermoplastic polyurethane compositions as a layer may also be obtained by coextrusion to form a sheet or other molded article or a sheathed fiber.

The color fast thermoplastic polyurethane compositions of the present invention may also be applied to the surface of an existing article by preparing an emulsion of the thermoplastic polyurethane composition, for example in powdered or flaked form, in a solvent such as water and applying the emulsion to the surface of an article.

For example the additional processing comprises a step selected from the group consisting of drying, curing, heating, hardening, molding, calendaring, rolling, casting, blow molding, curing, spraying, compression molding, blending, cross linking, further polymerization, chain extension, extrusion, co-extrusion, stretching, fiber production, dying, pigmenting, grinding, suspension, emulsification, coating.

The urethane polymer or other components of the thermoplastic polyurethane composition may be further polymerized, cross linked or chemically transformed after incorporation of the ultraviolet light absorber and nitroxyl containing compound.

For example, the urethane polymer may be further polymerized by reaction with additional polyol or isocyanate, or reacted with formaldehyde or other chain extenders to form longer polymer chains, or cross linked with traditional cross linking agents.

Particular embodiments provide color fast compositions comprising aromatic thermoplastic polyurethanes and methods for producing them.

Generally, the thermoplastic polyurethane compositions of the present invention also contain colorants such as dyes or pigments. A particular embodiment relates to pigmented compositions.

The thermoplastic polyurethane compositions of the instant invention will typically contain other additives. Common additives include, antioxidants, light stabilizers including hindered amines, phosphites or phosphonites, benzofuran-2-ones, thiosynergists, polyamide stabilizers, metal stearates, nucleating agents, fillers, reinforcing agents, lubricants, emulsifiers, dyes, pigments, dispersants, other optical brighteners, flame retardants, antistatic agents, blowing agents and the like or mixtures thereof.

For example, the compositions of the instant invention may also comprise an antioxidant and/or an N-H, N-Alkyl, N-OR, N-Acyl or N-OH hindered amine light stabilizer.

Specific examples of common polymer additives include:
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1-methylundec-1-yl)phenol, 2,4-dimethyl-6-(1-methylheptadec-1-yl)phenol, 2,4-dimethyl-6-(1-methyltridec-1-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.
   1.4. Tocopherols, for example α-tocopherol, β-tocopherol, γ-tocopherol, δ-tocopherol and mixtures thereof (Vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis(2,6-dimethyl-4-hydroxyphenyl)disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)-butane, 1,1-bis(5-tert-butyl-4-hydroxy-2-methyl-phenyl)-3-n-dodecylmercaptobutane, ethylene glycol bis[3,3-bis(3-tert-butyl-4-hydroxyphenyl)butyrate], bis(3-tert-butyl-4-hydroxy-5-methyl-phenyl)dicyclopentadiene, bis[2-(3'tert-butyl-2-hydroxy-5-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.
   1.7. Benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, 1,3,5-tri-(3,5-di-tert-butyl-4-hydroxybenzyl-2,4,6-trimethylbenzene, di-(3,5-di-tert-buty)-4-hydroxybenzyl) sulfide, 3,5-di-tert-butyl-4-hydroxybenzyl-mercapto-acetic acid isooctyl ester, bis-(4-tert-butyl-3-hydroxy-2,6-dimethylbenzyl)dithiol terephthalate, 1,3,5-tris-(3,5-di-tert-butyl-4-hydroxybenzyl) isocyanurate, 1,3,5-tris-(4-tert-butyl-3-hydroxy-2,6-dimethylbenzyl) isocyanurate, 3,5-di-tert-butyl-4-hydroxybenzyl-phosphoric acid dioctadecyl ester and 3,5-di-tert-butyl-4-hydroxybenzyl-phosphoric acid monoethyl ester, calcium-salt.
   1.8. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl 3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxy-lauric acid anilide, 4-hydroxystearic acid anilide, 2,4-bis-octylmercapto-6-(3,5-tert-butyl-4-hydroxyanilino)-s-triazine and octyl-N-(3,5-di-tert-butyl-4-hydroxyphenyl)-carbamate.
   1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)-ethyl]oxamide.
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenlenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol,
      4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylamino-methylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyl-diphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazin, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilizers
   2.1. 2-(2-Hydroxyphenyl)-2H-benzotriazoles, for example known commercial hydroxyphenyl-2H-benzotriazoles and benzotriazoles as disclosed in, United States Patent Nos. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352; 4,681,905, 4,853,471; 5,268,450; 5,278,314; 5,280,124; 5,319,091; 5,410,071; 5,436,349; 5,516,914; 5,554,760; 5,563,242; 5,574,166; 5,607,987 and 5,977,219, such as 2-(2-hydroxy-5-methylphenyl)-2H-benzotriazole, 2-(3,5-di-t-butyl-2-hydroxyphenyl)-2H-benzotriazole, 2-(2-hydroxy-5-t-butylphenyl)-2H-benzotriazole, 2-(2-hydroxy-5-t-octylphenyl)-2H-benzotriazole, 5-chloro-2-(3,5-di-t-butyl-2-hydroxyphenyl)-2H-benzotriazole, 5-chloro-2-(3-t-butyl-2-hydroxy-5-methylphenyl)-2H-benzotriazole, 2-(3-sec-butyl-5-t-butyl-2-hydroxyphenyl)-2H-benzotriazole, 2-(2-hydroxy-4-octyloxyphenyl)-2H-benzotriazole, 2-(3,5-di-t-amyl-2-hydroxyphenyl)-2H-benzotriazole, 2-(3,5-bis-α-cumyl-2-hydroxyphenyl)-2H-benzotriazole, 2-(3-t-butyl-2-hydroxy-5-(2-(ω-hydroxy-octa-(ethyleneoxy)-carbonyl-ethyl)-, phenyl)-2H-benzotriazole, 2-(3-dodecyl-2-hydroxy-5-methylphenyl)-2H-benzotriazole, 2-(3-t-butyl-2-hydroxy-5-(2-octyloxycarbonyl)ethylphenyl)-2H-benzotriazole, dodecylated 2-(2-hydroxy-5-methylphenyl)-2H-benzotriazole, 2-(3-t-butyl-2-hydroxy-5-(2-octyloxycarbonylethyl)phenyl)-5-chloro-2H-benzotriazole, 2-(3-tert-butyl-5-(2-(2-ethylhexyl-oxy)-carbonylethyl)-2-hydroxyphenyl)-5-chloro-2H-benzotriazole, 2-(3-t-butyl-2-hydroxy-5-(2-methoxycarbonylethyl)phenyl)-5-chloro-2H-benzotriazole, 2-(3-t-butyl-2-hydroxy-5-(2-methoxycarbonylethyl)phenyl)-2H-benzotriazole, 2-(3-t-butyl-5-(2-(2-ethylhexyloxy)carbonylethyl)-2-hydroxyphenyl)-2H-benzotriazole, 2-(3-t-butyl-2-hydroxy-5-(2-isooctyloxycarbonylethyl)-phenyl-2H-benzotriazole, 2,2'-methylene-bis(4-t-octyl-(6-2H-benzotriazol-2-yl)phenol), 2-(2-hydroxy-3-α-cumyl-5-t-octylphenyl)-2H-benzotriazole, 2-(2-hydroxy-3-t-octyl-5-α-cumylphenyl)-2H-benzotriazole, 5-fluoro-2-(2-hydroxy-3,5-di-α-cumylphenyl-2H-benzotriazole, 5-chloro-2-(2-hydroxy-3,5-di-α-cumylphenyl)-2H-benzotriazole, 5-chloro-2-(2-hydroxy-3-α-cumyl-5-t-octylphenyl)-2H-benzotriazole, 2-(3-t-butyl-2-hydroxy-5-(2-isooctyloxycarbonyl-ethyl)phenyl)-5-chloro-2H-benzotriazole, 5-trifluoromethyl-2-(2-hydroxy-3-α-cumyl-5-t-octylphenyl)-2H-benzotriazole, 5-trifluoromethyl-2-(2-hydroxy-5-t-octylphenyl-2H-benzotriazole, 5-trifluoromethyl-2-(2-hydroxy-3,5-di-t-octylphenyl)-2H-benzotriazole, methyl 3-(5-trifluoromethyl-2H-benzotriazol-2-yl)-5-t-butyl-4-hydroxyhydrocinnamate, 5-butylsulfonyl-2-(2-hydroxy-3-α-cumyl-5-t-octylphenyl)-2H-benzotriazole, 5-trifluoromethyl-2-(2-hydroxy-3-α-cumyl-5-t-butylphenyl)-2H-benzotriazole, 5-trifluoromethyl-2-(2-hydroxy-3,5-di-t-butylphenyl)-2H-benzotriazole, 5-trifluoromethyl-2-(2-hydroxy-3,5-di-α-cumylphenyl)-2H-benzotriazole, 5-butylsulfonyl-2-(2-hydroxy-3,5-di-t-butylphenyl)-2H-benzotriazole and 5-phenylsulfonyl-2-(2-hydroxy-3,5-di-t-butylphenyl)-2H-benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, as for example 4-tertbutyl-phenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates and malonates, for example, α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline, dimethyl p-methoxybenzylidenemalonate (CAS# 7443-25-6), and di-(1,2,2,6,6-pentamethylpiperidin-4-yl) p-methoxybenzylidenemalonate (CAS #147783-69-5).
   2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
   2.6. Sterically hindered amine stabilizers, for example 4-hydroxy-2,2,6,6-tetramethylpiperidine, 1-allyl-4-hydroxy-2,2,6,6-tetramethylpiperidine, 1-benzyl-4-hydroxy-2,2,6,6-tetramethylpiperidine, bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(1-octyloxy-2,2,6,6-tetramethyl-4-piperidyl) sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl) malonate, 3-n-octyl-7,7,9,9-tetramethyl-1,3,8-triazaspiro[4.5]decan-2,4-dione, bis(1-octyloxy-2,2,6,6-tetramethylpiperidyl) sebacate, bis(1-octyloxy-2,2,6,6-tetramethylpiperidyl) succinate, linear or cyclic condensates of N,N'-bis-(2,2,6,6-tetramethyl-4-piperidyl)-hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic acid anhydride-α-olefin-copolymer with 2,2,6,6-tetramethyl-4-aminopiperidine or 1,2,2,6,6-pentamethyl-4-aminopiperidine.
      The sterically hindered amine may also be one of the compounds described in GB-A-2301106 as component I-a), I-b), I-c), I-d), I-e), I-f), I-g), I-h), I-i), I-j), I-k) or I-I), in particular the light stabilizer 1-a-1, 1-a-2, 1-b-1, 1-c-1, 1-c-2, 1-d-1, 1-d-2, 1-d-3, 1-e-1, 1-f-1, 1-g-1, 1-g-2 or 1-k-1 listed on pages 68 to 73 of said GB-A-2301106.
      The sterically hindered amine may also be one of the compounds described in EP 782994, for example compounds as described in claims 10 or 38 or in Examples 1-12 or D-1 to D-5 therein.
      The sterically hindered amine may also be a hydroxylamine or hydroxylamine salt of hindered amine light stabilizers.
   2.7. Sterically hindered amines substituted on the N-atom by a hydroxy-substituted alkoxy group, for example compounds such as 1-(2-hydroxy-2-methylpropoxy)-4-octadecanoyloxy-2,2,6,6-tetramethylpiperidine, 1-(2-hydroxy-2-methylpropoxy)-4-hexadecanoyloxy-2,2,6,6-tetramethylpiperidine, the reaction product of 1-oxyl-4-hydroxy-2,2,6,6-tetramethylpiperidine with a carbon radical from t-amylalcohol, 1-(2-hydroxy-2-methylpropoxy)-4-hydroxy-2,2,6,6-tetramethylpiperidine, 1-(2-hydroxy-2-methylpropoxy)-4-oxo-2,2,6,6-tetramethylpiperidine, bis(1-(2-hydroxy-2-methylpropoxy)-2,2,6,6-tetramethyl-piperidin-4-yl) sebacate, bis(1-(2-hydroxy-2-methylpropoxy)-2,2,6,6-tetramethylpiperidin-4-yl) adipate, bis(1-(2-hydroxy-2-methylpropoxy)-2,2,6,6-tetramethylpiperidin-4-yl) succinate, bis(1-(2-hydroxy-2-methylpropoxy)-2,2,6,6-tetramethylpiperidin-4-yl) glutarate and 2,4-bis{N-[1-(2-hydroxy-2-methylpropoxy)-2,2,6,6-tetramethylpiperidin-4-yl]-N-butylamino}-6-(2-hydroxyethylamino)-s-triazine.
   2.8. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.9. Tris-aryl-o-hydroxyphenyl-s-triazines, for example known commercial tris-aryl-o-hydroxyphenyl-s-triazines and triazines as disclosed in, WO 96/28431, EP 434608, EP 941989, GB 2,317,893, United States Patent Nos. 3,843,371; 4,619,956; 4,740,542; 5,096,489; 5,106,891; 5,298,067; 5,300,414; 5,354,794; 5,461,151; 5,476,937; 5,489,503; 5,543,518; 5,556,973; 5,597,854; 5,681,955; 5,726,309; 5,942,626; 5,959,008; 5,998,116 and 6,013,704, for example 4,6-bis-(2,4-dimethylphenyl)-2-(2-hydroxy-4-octyloxyphenyl)-s-triazine, Cyasorb^{®} 1164, Cytec Corp, 4,6-bis-(2,4-dimethylphenyl)-2-(2,4-dihydroxyphenyl)-s-triazine, 2,4-bis(2,4-dihydroxyphenyl)-6-(4-chlorophenyl)-s-triazine, 2,4-bis[2-hydroxy-4-(2-hydroxyethoxy)phenyl]-6-(4-chlorophenyl)-s-triazine, 2,4-bis[2-hydroxy-4-(2-hydroxy-4-(2-hydroxyethoxy)phenyl]-6-(2,4-dimethylphenyl)-s-triazine, 2,4-bis[2-hydroxy-4-(2-hydroxyethoxy)phenyl]-6-(4-bromophenyl)-s-triazine, 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine, 2,4-bis(4-biphenylyl)-6-(2-hydroxy-4-octyloxycarbonylethylidene-oxyphenyl)-s-triazine, 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine, 2,4-bis(2,4-dimethylphenyl)-6-[2-hydroxy-4-(3-benzyloxy-2-hydroxypropyloxy)phenyl]-s-triazine, 2,4-bis(2-hydroxy-4-n-butyloxyphenyl)-6-(2,4-di-n-butyloxyphenyl)-s-triazine, 2,4-bis(2,4-dimethylphenyl)-6-[2-hydroxy-4-(3-nonyloxy*-2-hydroxypropyloxy)-5-α-cumylphenyl]-s-triazine (* denotes a mixture of octyloxy, nonyloxy and decyloxy groups), methylenebis-{2,4-bis(2,4-dimethylphenyl)-6-[2-hydroxy-4-(3-butyloxy-2-hydroxypropoxy)phenyl]-s-triazine}, methylene bridged dimer mixture bridged in the 3:5', 5:5' and 3:3' positions in a 5:4:1 ratio, 2,4,6-tris(2-hydroxy-4-isooctyloxycarbonylisopropylideneoxyphenyl)-s-triazine, 2,4-bis(2,4-dimethylphenyl)-6-(2-hydroxy-4-hexyloxy-5-(α-cumylphenyl)-s-triazine, 2-(2,4,6-trimethylphenyl)-4,6-bis[2-hydroxy-4-(3-butyloxy-2-hydroxypropyloxy)phenyl]-s-triazine, 2,4,6-tris[2-hydroxy-4-(3-sec-butyloxy-2-hydroxypropyloxy)phenyl]-s-triazine, mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine, 4,6-bis-(2,4-dimethylphenyl)-2-(2-hydroxy-4-(3-(2-ethylhexyloxy)-2-hydroxypropoxy)-phenyl)-s-triazine and 4,6-diphenyl-2-(4-hexyloxy-2-hydroxyphenyl)-s-triazine.
3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-dibenzo[d,f][1,3,2]dioxaphosphepin, 6-fluoro-2,4,8,10-tetra-tert-butyl-12-methyl-dibenzo[d,g][1,3,2]dioxaphosphocin, bis(2,4-di-tert-butyl-6-methylphenyl) methyl phosphite, bis(2,4-di-tert-butyl-6-methylphenyl) ethyl phosphite, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite.
5. Benzofuranones and indolinones, for example those disclosed in U.S. Pat. Nos. 4,325,863, 4,338,244, 5,175,312, 5,216,052, 5,252,643; DE-A-4316611; DE-A-4316622; DE-A-4316876; EP-A-0589839 or EP-A-0591102 or 3-[4-(2-acetoxyeth-oxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]-phenyl)benzofuran-2-one], 5,7-di-tert-butyl-3-(4-ethoxyphenyl)benzofuran-2-one, 3-(4-acet-oxy-3,5-dimethylphenyl)-5,7-di-tert-butyl-benzofuran-2-one, 3-(3,5-dimethyl-4-pivaloyloxy-phenyl)-5,7-di-tert-butyl-benzofuran-2-one, 3-(3,4-dimethylphenyl)-5,7-di-tert-butyl-benzofuran-2-one, and 3-(2,3-dimethylphenyl)-5,7-di-tert-butyl-benzofuran-2-one.
6. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N-methyl-N-octadecylhydroxylamine and the N,N-dialkylhydroxylamine derived from hydrogenated tallow amine.
7. Nitrones, for example N-benzyl-α-phenylnitrone, N-ethyl-α-methylnitrone, N-octyl-α-heptylnitrone, N-lauryl-α-undecylnitrone, N-tetradecyl-α-tridcylnitrone, N-hexadecyl-α-pentadecylnitrone, N-octadecyl-α-heptadecylnitrone, N-hexadecyl-α-heptadecylnitrone, N-ocatadecyl-α-pentadecylnitrone, N-heptadecyl-α-heptadecylnitrone, N-octadecyl-α-hexadecylnitrone, N-methyl-α-heptadecylnitrone and the nitrone derived from N,N-dialkylhydroxylamine derived from hydrogenated tallow amine.
8. Amine oxides, for example amine oxide derivatives as disclosed in U.S. Patent Nos. 5,844,029 and 5,880,191, didecyl methyl amine oxide, tridecyl amine oxide, tridodecyl amine oxide and trihexadecyl amine oxide.
9. Thiosynergists, for example dilauryl thiodipropionate or distearyl thiodipropionate.
10. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
11. Polyamide stabilizers, for example copper salts in combination with iodides and/or phosphorus compounds and salts of divalent manganese.
12. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example, calcium stearate, zinc stearate, magnesium behenate, magnesium stearate, sodium ricinoleate and potassium palmitate, antimony pyrocatecholate or zinc pyrocatecholate.
13. Nucleating agents, for example inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers).
14. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
15. Dispersing Agents, such as polyethylene oxide waxes or mineral oil.
16. Other additives, for example plasticizers, lubricants, emulsifiers, pigments, dyes, other optical brighteners, rheology additives, catalysts, flow-control agents, slip agents, crosslinking agents, crosslinking boosters, halogen scavengers, smoke Inhibitors, flameproofing agents, antistatic agents, clarifiers such as substituted and unsubstituted bisbenzylidene sorbitols, benzoxazinone UV absorbers such as 2,2'-p-phenylene-bis(3,1-benzoxazin-4-one), and blowing agents.

Colorants, e. g., dyes and pigments, are typically present in the thermoplastic polyurethane compositions of the instant invention and include organic and inorganic colorants. Colorant compounds which may serve roles other than simply adding color, such as titanium dioxide and carbon black, are also common in these compositions.

In determining the optimum effective amount of nitroxyl, UVA and/or HALS or other optional additives, it is necessary to take into account all the factors that impact the color change of polyurethane composition. For example, the initial color and rate of color change attributable to the nitroxyl and the rate at which different urethane polymers, urethane co-polymers or urethane polymer blends discolor vary. The rate of color change will also depend on factors including whether the polyurethane resin is aliphatic or aromatic, types of colorants and other additives present, processing conditions and conditions of use etc. The optimum concentration for the nitroxyl and UVA will also depend on the thickness and clarity of the thermoplastic polyurethane article ultimately produced. Determining the most beneficial amount of nitroxyl will therefore require such experimentation as is common these applications.

Another aspect of the instant invention provides a method for improving the color fastness upon exposure to light of polyurethane compositions, which method comprises adding an effective amount of a compound containing at least nitroxyl moiety of formula I to a composition comprising a thermoplastic polyurethane polymer and an ultraviolet light absorber.

Definitions and preferences given for the composition above apply also for the other aspects of the invention.

Typically the ultraviolet light absorber and/or compound containing at least one nitroxyl moiety of formula I are incorporated by extrusion carried out at a temperature between 140 and 250 °C.

For example the extrusion is carried out at a temperature between 170 and 220 °C.

In a specific embodiment the polyurethane composition is subjected to an additional processing step after addition of the mixture of an ultraviolet light absorber and a compound containing at least one nitroxyl moiety of formula I.

In particular the additional processing step occurs at or above temperatures of 45 °C.

For example the additional processing step comprises a step selected from the group consisting of drying, curing, heating, hardening, molding, calendaring, rolling, casting, blow molding, curing, spraying, compression molding, blending, cross linking, further polymerization, chain extension, extrusion, co-extrusion, stretching, fiber production, dying, pigmenting, grinding, suspension, emulsification, coating.

Yet another aspect of the invention is the use of a mixture of an ultraviolet light absorber and a compound containing at least one nitroxyl moiety of formula I 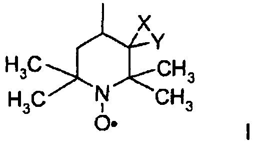 wherein X and Y are either H or together form a double bond to oxygen to limit the discoloration of a thermoplastic polyurethane after UV exposure to a change in color as measured by delta E of less than 5 after 2,500 kJ of Xenon exposure according to SAE J 1960 test protocol.

The following examples illustrate but do not limit the invention.

### Examples

Dried mixtures of a commercial aromatic polyether-based thermoplastic polyurethane with Shore hardness ~50, and various additive packages, e. g., UVAs, nitroxyls, anti-oxidants and/or HALS etc. are extruded in a Leistritz 27mm twin screw extruder with a standard mixing screw. Extrusion temperatures are between 200°C and 210°C, Barrel residence time is 1 minute. The polyurethane compositions are ground into pellets.

Compression molded 2 by 2 inch, 60 mil thick plaques of the above formulations are prepared and exposed to UV light in a Xenon weatherometer according to SAE J 1960 test protocol, 2,500 kJ of total UV exposure. An additional set of plaques are subjected to QUV/B exposure for 115 hours. Color is measured before and after UV exposure according to ASTM E-313, DCI SF600 Spectrophotometer; Large Area View; Spectral Component Included, D65 Illuminant, 10° observer.

The plaques containing the UVA/ nitroxyl combination of the present invention exhibit a significantly lower dleta E (change in color, also referred to as DE) than plaques without a nitroxyl compound.

Thermoplastic polyurethane plaques containing UVAs, nitroxyls and anti-oxidants are prepared following the general procedure above. The concentration of nitroxyl is varied and the delta E is shown to be dependent on nitroxyl concentration.

Following the procedures above, the following formulations of a commercial aromatic polyether-based thermoplastic polyurethane with Shore hardness ~50 are prepared, formed into plaques and exposed to UV light in a Xenon weatherometer according to Interior Automotive SAE J 1960 test protocol, Sept. 1989 (Irradiance, W/m² = 0.55 Light; Wet bulb depression = 12°C Light; Black panel temperature = 38°C Dark, 89°C Light; Conditioning water = 40°C Dark, 63°C Light; Cycle: 3.8 hours light /1 hour darkness; Quartz/borosillicate filters).

Color is taken before and after 1,500 kJ and 2,500 kJ exposure as described above. Delta E after 2,500 kJ is reported in the table. After 1,500 KJ of exposure only formulations 1 and 2 have a delta E of less than 10.

| Formulation | AO | HALS | UVA | Nitroxyl | delta E |
|---|---|---|---|---|---|
| 1 | AO 1 | O% | UVA 1 | A , 0.5% | < 5 |
| 2 reference formulation | AO 1 | HALS 1, 0.25% | UVA 1 | A, 0.25% | < 15 |
| 3 reference formulation | AO 1 | HALS 2, 0.5% | UVA 2 | 0% | > 15 |
| 4 reference formulation | AO 1 | HALS 3, 0.5% | UVA 1 | 0% | > 20 |
| 5 reference formulation | AO 1 | HALS 1,0.5% | UVA 3 | 0% | > 20 |
| 6 reference formulation | AO 2 | HALS 1, 0.5% | UVA 1 | 0% | > 20 |
| 7 reference formulation | AO 2 | HALS 1,0.5% | UVA 3 | 0% | > 20 |
| 8 (blank) | - | - | - | - | > 40 |

AO 1 = 2:1 triethyleneglycol bis[3-(3-t-butyl-4-hydroxy-5methylphenyl)propionate] :
bis(2,4-di-t-butylphenyl)pentaerithritol diphosphite
   AO 2 = triethyleneglycol bis[3-(3-t-butyl-4-hydroxy-5methylphenyl)propionate] HALS 1 = bis(1,2,2,6,6-pentamethyl-4-piperidyl) sebacate
   HALS 2 = 4-stearyloxy-2,2,6,6-tetramethylpiperidine
   HALS 3 = the condensate of 1-(2-hydroxyethyl)-2,2,6,6-tetramethyl-4-hydroxypiperidine
and succinic acid
   UVA 1 = 2-(3-dodecyl-2-hydroxy-5-methylphenyl}-2H-benzotriazole
   UVA 2 = 4,6-bis-(2,4-dimethylphenyl)-2-(2-hydroxy4-octyloxyphenyl)-s-triazine
   UVA 3 = 2-(3-t-butyl-2-hydroxy-5-(2-(ω-hydroxy-octa-(ethyleneoxy)carbonyl-ethyl)-, phenyl)-2H-benzotriazole

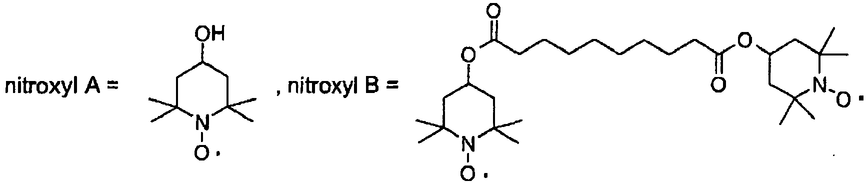

Plaques of similar formulations are again prepared and exposed however formulations 1 and 2 contain nitroxyl B in the concentrations shown. Similar results are achieved, the nitroxyl containing formulations again outperform the others.

## Claims

1. A method for preserving the color fastness of thermoplastic polyurethane compositions which method comprises incorporating into a thermoplastic polyurethane composition by extrusion carried out at a temperature between 140 and 250°C an amount from 0.2 to 5.1 weight % based on the total weight of the thermoplastic polyurethane composition of a mixture of an ultraviolet light absorber and a compound containing at least one nitroxyl moiety of formula I 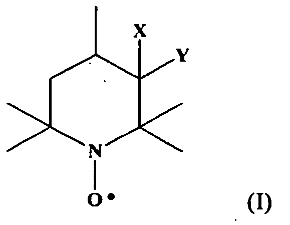 wherein X and Y are either H or together form a double band to oxygen
the amount being effective to produce a change in color as measured by delta E of less than 5 after 2,500 kJ of Xenon exposure according to SAE J 1960 test protocol.

2. A method according to claim 1, wherein the thermoplastic polyurethane composition exhibits a change in color as measured by delta E of less than 3 after 1,250 kJ of Xenon exposure according to SAE J 1885 test protocol.

3. A method according to claim 1, wherein the UVA is present in an amount from 0.1 to 5 weight % based and the total weight of the thermoplastic polyurethane composition and is selected from the group consisting of 2-(2-hydroxyphenyl)-2H-benzotriazoles, tris-aryl-o-hydroxyphenyl-s-triazines, 2-hydroxybenzophenones, formamidines and oxanilides,
and the compound containing at least one nitroxyl moiety of formula I is present in an amount from 0.1 to 5 weight % based on the total weight of the thermoplastic polyurethane composition.

4. A method according to claim 3, wherein the total amount of UVA and compound containing at least one nitroxyl moiety of formula I together is present in an amount from 0.2 to 2 weight % based on the total weight of the thermoplastic polyurethane composition.

5. A method according to claim 1, wherein the compound containing at least one nitroxyl moiety of formula I is selected from the group consisting of compounds of formulae A to F. 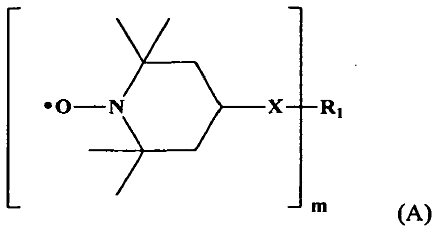 X is a direct bond, an oxygen atom or a group 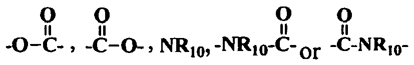 m is 1, 2, 3 or 4 and
when m is 1
R₁ is hydrogen, alkyl of 1-18 carbon atoms, alkenyl of 2-18 carbon atoms, alkynyl of 2-18 carbon atoms, cycloalkyl of 5 to 12 carbon atoms, said alkyl, alkenyl, alkynyl or cycloalkyl substituted one or more times by one or more OR₃, phenyl, NR₃R₃', COOR₃, COOM⁺, CONR₃R₃';
alkyl of 2 to 18 carbon atoms substituted by oxirane;
aryl of 6 to 12 carbon atoms, said aryl substituted by one to four alkyl groups of 1 to 4 carbon atoms, OR₃, NR₃R₃', COOR₃, COOM⁺, CONR₃R₃';
alkyl of 2 to 18 carbon atoms, alkenyl of 3-18 carbon atoms, alkynyl of 3-18 carbon atoms or cycloalkyl of 5 to 12 carbon atoms interrupted one or more times by one or more groups X as defined above, said interrupted alkyl, alkenyl, alkynyl or cycloalkyl substituted one or more times by one or more OR₃, phenyl, NR₃R₃', COOR₃, COOM⁺, CONR₃R₃';
where R₃ and R₃' are independently of each other hydrogen, alkyl of 1 to 18 carbon atoms, alkyl of 1 to 18 carbon atoms interrupted one or more times by oxygen, cycloalkyl of 5 to 12 carbon atoms, aryl of 6 to 12 carbon atoms, said aryl substituted by one to four alkyl of 1 to 4 carbon atoms, aralkyl of 7-12 carbon atoms, or alkylcarbonyl of 2 to 18 carbon atoms, cycloalkylcarbonyl of 6 to 13 carbon atoms, arylcarbonyl of 7 to 13 carbon atoms, said aryl substituted by one to four alkyl of 1 to 4 carbon atoms and M⁺ is a metal ion from the 1st, 2nd or 3rd group of the periodic table or is Zn, Cu, Ni or Co, or M is a group Nⁿ⁺(R₂)₄ where R₂ is alkyl of 1 to 8 carbon atoms or benzyl; when m is 2,
R₁ is alkylene of 1 to 12 carbon atoms, alkenylene of 2 to 12 carbon atoms, cycloalkylene of 5 to 12 carbon atoms, aralkylene of 7 to 15 carbon atoms or arylene of 6 to 12 carbon atoms, alkylene of 2 to 12 carbon atoms interrupted one or more times by one or more O, -NR₃ -, -CONR₃-, -COO-,
and when m is 2 and X is a direct bond
R₁ is -N(R₃)R₄N(R₃)- where R₄ is alkylene of 2 to 18 carbon atoms, cycloalkylene of 5 to 12 carbon atoms, aralkylene of 8 to 15 carbon atoms or arylene of 6 to 12 carbon atoms or R₁ is -COO- or -NH-CO-NH-;
when m is 3,
R₂ is alkanetriyl of 3 to 8 carbon atoms or benzenetriyl, and
when m is 4,
R₂ is alkanetetrayl of 5 to 8 carbon atoms or benzenetetrayl: 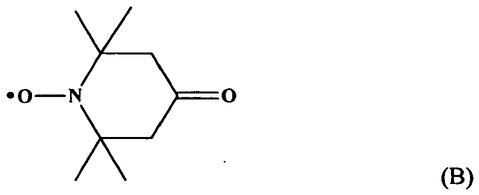 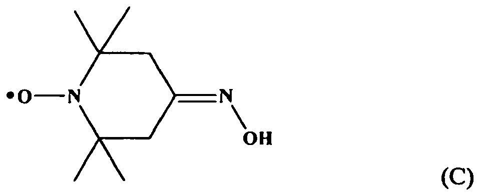 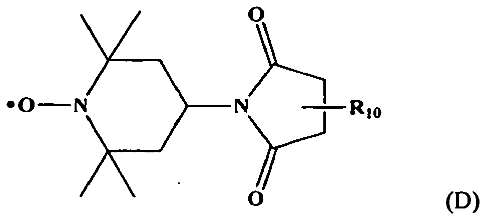 R₁₀ is hydrogen, alkyl of 1 to 18 carbon atoms, cycloalkyl of 5 to 12 carbon atoms, aralkyl of 7 to 15 carbon atoms, alkanoyl of 2 to 18 carbon atoms, alkenoyl of 3 to 5 carbon atoms or benzoyl: 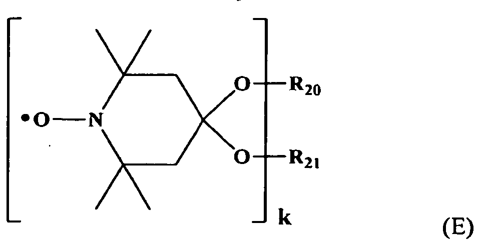 wherein k is I or 2,
when k is 1,
R₂₀ and R₂₁ are independently alkyl of 1 to 12 carbon atoms, alkenyl of 2 to 12 carbon atoms or aralkyl of 7 to 15 carbon atoms, or
R₂₀ and R₂₁ together are alkylene of 2 to 8 carbon atoms or said alkylene substituted by hydroxyl, or are acyloxy-alkylene of 4 to 22 carbon atoms, or
when k is 2,
R₂₀ and R₂₁ are together (-CH₂)₂C(CH₂-)₂: 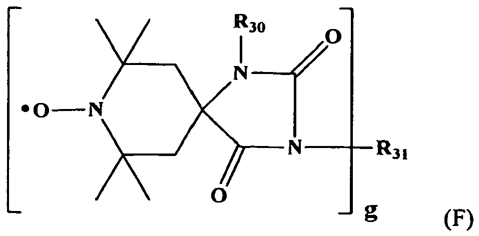 R₃₀ is hydrogen, alkyl of 1 to 18 carbon atoms, benzyl, glycidyl, or alkoxyalkyl of 2 to 6 carbon atoms,
g is 1 or 2,
when g is 1, R₃₁ is hydrogen, alkyl of 1 to 18 carbon atoms, alkenyl of 2-18 carbon atoms, propargyl, glycidyl, alkyl of 2 to 50 carbon atoms interrupted by one to twenty oxygen atoms, said alkyl substituted by one to ten hydroxyl groups or both interrupted by said oxygen atoms and substituted by said hydroxyl groups, or
R₃₁ is alkyl of 1 to 4 carbon atoms substituted by a carboxy group or by -COOZ where Z is hydrogen, alkyl of 1 to 4 carbon atoms or phenyl, or where Z is said alkyl substituted by -(COO⁻)ₙMⁿ⁺ where n is 1-3 and M is a metal ion from the 1st, 2nd or 3rd group of the periodic table or is Zn, Cu, Ni or Co, or M is a group Nⁿ⁺(R₂)₄ where R₂ is alkyl of 1 to 8 carbon atoms or benzyl,
when g is 2, R₃₁ is alkylene of 1 to 12 carbon atoms, alkenylene of 4 to 12 carbon atoms, xylylene or alkylene of 1 to 50 carbon atoms interrupted by one to twenty oxygen atoms, substituted by one to ten hydroxyl groups or both interrupted by said oxygen atoms and substituted by said hydroxyl groups.

6. A method according to claim 5 wherein the compound containing at least one nitroxyl moiety of formula I is selected from the group consisting of compounds of formulae A, B, C and D,
wherein, in formula A
X is a an oxygen atom, 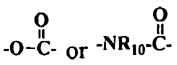 m is 1 or 2 and
when m is 1
R₁ is hydrogen, alkyl of 1 to 18 carbon atoms, alkenyl of 2-18 carbon atoms, said alkyl or alkenyl substituted one or more times by one or more OR₃, COOR₃ or CONR₃R₃'; alkyl of 3 to 12 carbon atoms substituted by oxirane;
alkyl of 2 to 18 carbon atoms interrupted one or more times by one or more oxygen
atoms or groups 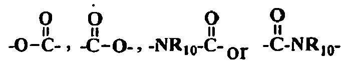 or said interrupted alkyl substituted one or more times by one or more OR₃, COOR₃, CONR₃R₃'; when m is 2,
R₁ is alkylene of 1 to 12 carbon atoms, alkylene of 2 to 12 carbon atoms interrupted one or more times by one or more O, -CONR₃-, -COO-, and or substituted one or more times by OR₃.

7. A method according to claim 1 wherein the thermoplastic polyurethane composition comprises an aromatic thermoplastic polyurethane.

8. A method according to claim 1 which also comprises adding at least one pigment or dye.

9. A method according to claim 1 which also comprises adding at least one additive selected from the group consisting of antioxidants and N-H, N-Alkyl, N-OR, N-Acyl and N-OH hindered amine light stabilizers.

10. A method according to claim 1 wherein the extrusion is carried out at a temperature between 170 and 220°C.

11. A method according to claim 1 wherein the polyurethane composition is subjected to an additional processing step after addition of the mixture of an ultraviolet light absorber and a compound containing at least one nitroxyl moiety of formula I.

12. A method according to claim 11, wherein the additional processing step occurs at or above temperatures of 45°C.

13. A method according to claim 11 wherein the additional processing step comprises a step selected from the group consisting of drying, curing, heating, hardening, molding, calendaring, rolling, casting, blow molding, curing, spraying, compression molding, blending, cross linking, further polymerization, chain extension, extrusion, co-extrusion, stretching, fiber production, dying, pigmenting, grinding, suspension, emulsification, coating.

## Patentansprüche

1. Verfahren zur Bewahrung der Farbechtheit von thermoplastischen Polyurethanzusammensetzungen, bei dem man in eine thermoplastische Polyurethanzusammensetzung durch bei einer Temperatur zwischen 140 und 250°C durchgeführte Extrusion eine Menge von 0,2 bis 5,1 Gew.-%, bezogen auf das Gesamtgewicht der thermoplastischen Polyurethanzusammensetzung, einer Mischung eines Ultraviolettlichtabsorbers und einer Verbindung mit mindestens einer Nitroxylgruppierung der Formel I 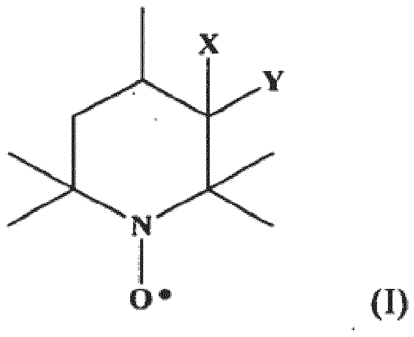 worin X und Y entweder für H stehen oder zusammen eine Doppelbindung zu Sauerstoff bilden, einfügt wobei die Menge eine durch Delta E gemessene Farbänderung von weniger als 5 nach 2500 kJ Xenonbelichtung gemäß der Testvorschrift SAE J 1960 hervorruft.

2. Verfahren nach Anspruch 1, wobei die thermoplastische Polyurethanzusammensetzung eine durch Delta E gemessene Farbänderung von weniger als 3 nach 1250 kJ Xenonbelichtung gemäß der Testvorschrift SAE J 1885 aufweist.

3. Verfahren nach Anspruch 1, bei dem der UVA in einer Menge von 0,1 bis 5 Gew.-%, bezogen auf das Gesamtgewicht der thermoplastischen Polyurethanzusammensetzung, vorliegt und aus der Gruppe bestehend aus 2-(2-Hydroxyphenyl)-2H-benzo-triazolen, Trisaryl-o-hydroxyphenyl-s-triazinen, 2-Hydroxybenzophenonen, Formamidinen und Oxaniliden ausgewählt wird
und die Verbindung mit mindestens einer Nitroxylgruppierung der Formel I in einer Menge von 0,1 bis 5 Gew.-%, bezogen auf das Gesamtgewicht der thermoplastischen Polyurethanzusammensetzung, vorliegt.

4. Verfahren nach Anspruch 3, bei dem die Gesamtmenge an UVA und Verbindung mit mindestens einer Nitroxylgruppierung der Formel I zusammen in einer Menge von 0,2 bis 2 Gew.-%, bezogen auf das Gesamtgewicht der thermoplastischen Polyurethanzusammensetzung, vorliegt.

5. Verfahren nach Anspruch 1, bei dem die Verbindung mit mindestens einer Nitroxylgruppierung der Formel I aus der Gruppe bestehend aus Verbindungen der Formeln A bis F ausgewählt wird: 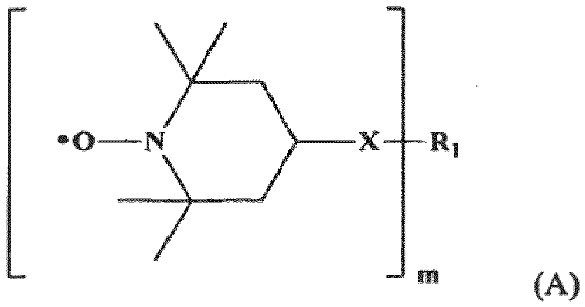 worin
X für eine direkte Bindung, ein Sauerstoffatom
oder eine Gruppe 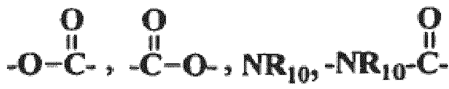 oder 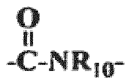 steht, m für 1, 2, 3 oder 4 steht und
dann, wenn m gleich 1 ist,
R₁ für Wasserstoff, Alkyl mit 1-18 Kohlenstoffatomen, Alkenyl mit 2-18 Kohlenstoffatomen, Alkinyl mit 2-18 Kohlenstoffatomen, Cycloalkyl mit 5 bis 12 Kohlenstoffatomen, wobei das Alkyl, Alkenyl, Alkinyl oder Cycloalkyl ein- oder mehrfach durch ein oder mehrere OR₃, Phenyl, NR₃R_{3'}, COOR₃, COOM⁺, CONR₃R_{3'} substituiert ist;
Alkyl mit 2 bis 18 Kohlenstoffatomen, das durch Oxiran substituiert ist;
Aryl mit 6 bis 12 Kohlenstoffatomen, wobei das Aryl durch eine bis vier Alkylgruppen mit 1 bis 4 Kohlenstoffatomen, OR₃, NR₃R₃', COOR₃, COOM⁺, CONR₃R₃, substituiert ist;
Alkyl mit 2 bis 18 Kohlenstoffatomen, Alkenyl mit 3-18 Kohlenstoffatomen, Alkinyl mit 3-18 Kohlenstoffatomen oder Cycloalkyl mit 5 bis 12 Kohlenstoffatomen, das ein- oder mehrfach durch eine oder mehrere Gruppen X gemäß obiger Definition unterbrochen ist, wobei das unterbrochene Alkyl, Alkenyl, Alkinyl oder Cycloalkyl ein- oder mehrfach durch ein oder mehrere OR₃, Phenyl, NR₃R_{3'}, COOR₃, COOM⁺, CONR₃R_{3'}, substituiert ist;
steht;
wobei R₃ und R₃, unabhängig voneinander für Wasserstoff, Alkyl mit 1 bis 18 Kohlenstoffatomen, Alkyl mit 1 bis 18 Kohlenstoffatomen, das ein- oder mehrfach durch Sauerstoff unterbrochen ist, Cycloalkyl mit 5 bis 12 Kohlenstoffatomen, Aryl mit 6 bis 12 Kohlenstoffatomen, wobei das Aryl durch eine bis vier Alkylgruppen mit 1 bis 4 Kohlenstoffatomen substituiert ist, Aralkyl mit 7-12 Kohlenstoffatomen oder Alkylcarbonyl mit 2 bis 18 Kohlenstoffatomen, Cycloalkylcarbonyl mit 6 bis 13 Kohlenstoffatomen, Arylcarbonyl mit 7 bis 13 Kohlenstoffatomen, wobei das Aryl durch eine bis vier Alkylgruppen mit 1 bis 4 Kohlenstoffatomen substituiert ist, steht
und M⁺ für ein Metall aus der 1., 2. oder 3. Gruppe des Periodensystems oder für Zn, Cu, Ni oder Co steht oder M für eine Gruppe Nⁿ⁺(R₂)₄ steht, wobei R₂ für Alkyl mit 1 bis 8 Kohlenstoffatomen oder Benzyl steht;
dann, wenn m gleich 2 ist,
R₁ für Alkylen mit 1 bis 12 Kohlenstoffatomen, Alkenylen mit 2 bis 12 Kohlenstoffatomen,
Cycloalkylen mit 5 bis 12 Kohlenstoffatomen, Aralkylen mit 7 bis 15 Kohlenstoffatomen oder Arylen mit 6 bis 12 Kohlenstoffatomen, Alkylen mit 2 bis 12 Kohlenstoffatomen, das ein- oder mehrfach durch ein oder mehrere -O-, -NR₃-, -CONR₃-, -COOunterbrochen ist, steht
und dann, wenn m gleich 2 ist und X für eine Einfachbindung steht,
R₁ für -N(R₃)R₄N(R₃)- steht, wobei R₄ für Alkylen mit 2 bis 18 Kohlenstoffatomen, Cycloalkylen mit 5 bis 12 Kohlenstoffatomen, Aralkylen mit 8 bis 15 Kohlenstoffatomen oder Arylen mit 6 bis 12 Kohlenstoffatomen steht, oder R₁ für -COO- oder -NH-CO-NH- steht;
dann, wenn m gleich 3 ist,
R₂ für Alkantriyl mit 3 bis 8 Kohlenstoffatomen oder Benzoltriyl steht und
dann, wenn m gleich 4 ist,
R₂ für Alkantetrayl mit 5 bis 8 Kohlenstoffatomen oder Benzoltetrayl steht; 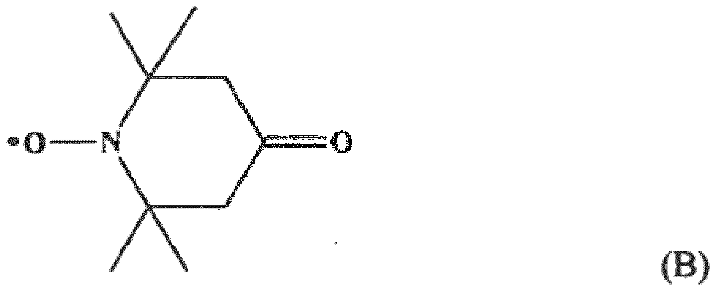 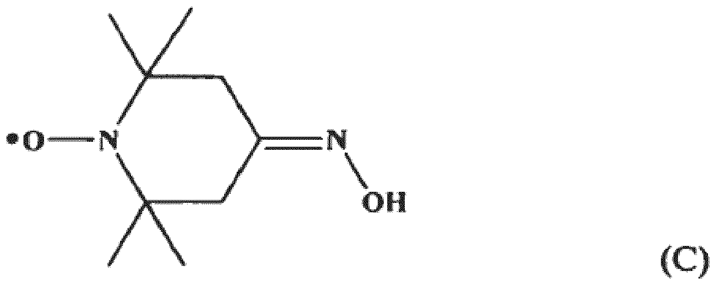 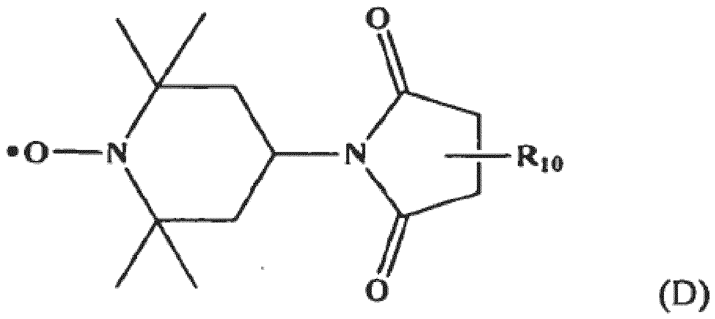 R₁₀ für Wasserstoff, Alkyl mit 1 bis 18 Kohlenstoffatomen, Cycloalkyl mit 5 bis 12 Kohlenstoffatomen, Aralkyl mit 7 bis 15 Kohlenstoffatomen, Alkanoyl mit 2 bis 18 Kohlenstoffatomen, Alkenoyl mit 3 bis 5 Kohlenstoffatomen oder Benzoyl steht; 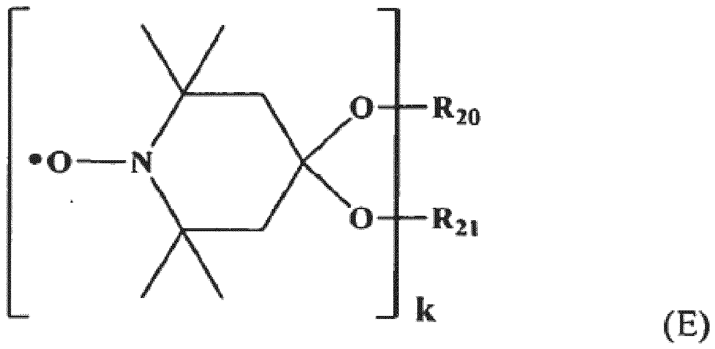 worin k für 1 oder 2 steht,
dann, wenn k gleich 1 ist,
R₂₀ und R₂₁ unabhängig voneinander für Alkyl mit 1 bis 12 Kohlenstoffatomen, Alkenyl mit 2 bis 12 Kohlenstoffatomen oder Aralkyl mit 7 bis 15 Kohlenstoffatomen stehen oder
R₂₀ und R₂₁ zusammen für Alkylen mit 2 bis 8 Kohlenstoffatomen stehen oder das Alkylen duch Hydroxyl substituiert ist oder für Acyloxy-alkylen mit 4 bis 22 Kohlenstoffatomen stehen oder
dann, wenn k gleich 2 ist,
R₂₀ und R₂₁ zusammen für -(CH₂)₂C(CH₂-)₂ stehen; 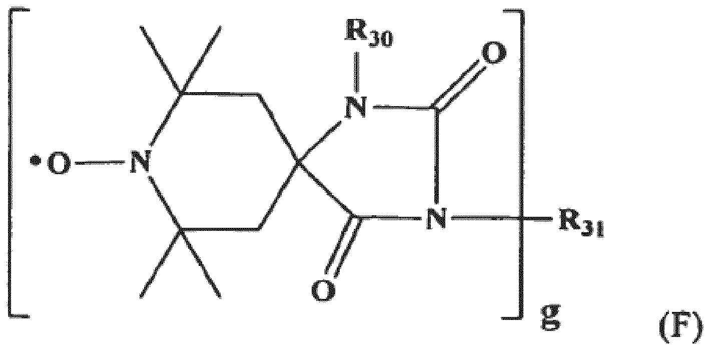 R₃₀ für Wasserstoff, Alkyl mit 1 bis 18 Kohlenstoffatomen, Benzyl, Glycidyl oder Alkoxyalkyl mit 2 bis 6 Kohlenstoffatomen steht,
g für 1 oder 2 steht,
dann, wenn g gleich 1 ist, R₃₁ für Wasserstoff, Alkyl mit 1 bis 18 Kohlenstoffatomen, Alkenyl mit 2 bis 18 Kohlenstoffatomen, Propargyl, Glycidyl, Alkyl mit 2 bis 50 Kohlenstoffatomen, das durch ein bis zwanzig Sauerstoffatome unterbrochen ist, wobei das Alkyl durch eine bis zehn Hydroxylgruppen substituiert ist oder sowohl durch die Sauerstoffatome unterbrochen als auch durch die Hydroxylgruppen substituiert ist, steht oder
R₃₁ für Alkyl mit 1 bis 4 Kohlenstoffatomen, das durch eine Carboxygruppe oder -COOZ substituiert ist, steht, wobei Z für Wasserstoff, Alkyl mit 1 bis 4 Kohlenstoffatomen oder Phenyl steht oder wobei Z für das Alkyl, das durch - (COO⁻)ₙMⁿ⁺ substituiert ist, steht, wobei n für 1-3 steht und M für ein Metallion aus der 1., 2. oder 3. Gruppe des Periodensystems oder für Zn, Cu, Ni oder Co steht oder M für eine Gruppe Nⁿ⁺(R₂)₄ steht, wobei R₂ für Alkyl mit 1 bis 8 Kohlenstoffatomen oder Benzyl steht;
wenn g gleich 2 ist, R₃₁ für Alkylen mit 1 bis 12 Kohlenstoffatomen, Alkenylen mit 4 bis 12 Kohlenstoffatomen, Xylylen oder Alkylen mit 1 bis 50 Kohlenstoffatomen, das durch ein bis zwanzig Sauerstoffatomen unterbrochen ist, wobei das Alkyl durch eine bis zehn Hydroxylgruppen substituiert ist oder sowohl durch die Sauerstoffatome unterbrochen als auch durch die Hydroxylgruppen substituiert ist, steht.

6. Verfahren nach Anspruch 5, bei dem die Verbindung mit mindestens einer Nitroxylgruppierung der Formel I aus der Gruppe bestehend aus Verbindungen der Formeln A, B C und D ausgewählt wird,
wobei in Formel A
X für ein Sauerstoffatom, 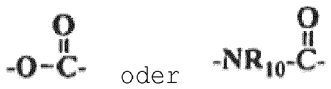 steht,
m für 1 oder 2 steht und
dann, wenn m gleich 1 ist,
R₁ für Wasserstoff, Alkyl mit 1 bis 18 Kohlenstoffatomen, Alkenyl mit 2-18 Kohlenstoffatomen, wobei das Alkyl oder Alkenyl ein- oder mehrfach durch ein oder mehrere OR₃, COOR₃ oder CONR₃R₃, substituiert ist;
Alkyl mit 3 bis 12 Kohlenstoffatomen, das durch Oxiran substituiert ist;
Alkyl mit 2 bis 18 Kohlenstoffatomen, das ein- oder mehrfach durch ein oder mehrere Sauerstoffatome oder Gruppen 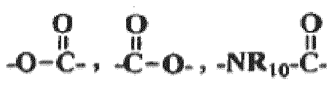 oder 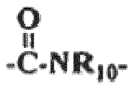 unterbrochen ist oder das unterbrochene Alkyl ein- oder mehrfach durch ein oder mehrere OR₃, COOR₃ oder CONR₃R_{3'} substituiert ist;
steht;
dann, wenn m gleich 2 ist,
R₁ für Alkylen mit 1 bis 12 Kohlenstoffatomen, Alkylen mit 2 bis 12 Kohlenstoffatomen, das ein- oder mehrfach durch ein oder mehrere -O-, -CONR₃-, -COO- unterbrochen ist und ein- oder mehrfach durch OR₃ substituiert ist, steht.

7. Verfahren nach Anspruch 1, bei dem die thermoplastische Polyurethanzusammensetzung ein aromatisches thermoplastisches Polyurethan umfasst.

8. Verfahren nach Anspruch 1, bei dem man außerdem mindestens ein Pigment oder mindestens einen Farbstoff zugibt.

9. Verfahren nach Anspruch 1, bei dem man außerdem mindestens ein Additiv aus der Gruppe bestehend aus Antioxidantien und N-H-, N-Alkyl-, N-OR-, N-Acyl- und N-OH-HALS-Verbindungen (HALS = hindered amine light stabilizer) zugibt.

10. Verfahren nach Anspruch 1, bei dem man die Extrusion bei einer Temperatur zwischen 170 und 220°C durchführt.

11. Verfahren nach Anspruch 1, bei dem man die Polyurethanzusammensetzung nach der Zugabe der Mischung eines Ultraviolettlichtabsorbers und einer Verbindung mit mindestens einer Nitroxylgruppierung der Formel I einem zusätzlichen Verarbeitungsschritt unterwirft.

12. Verfahren nach Anspruch 11, bei dem der zusätzliche Verarneitungsschritt bei oder oberhalb von Temperaturen von 45°C erfolgt.

13. Verfahren nach Anspruch 11, bei dem der zusätzliche Verarbeitungsschritt einen Schritt aus der Gruppe bestehend aus Trocknen, Härten, Erhitzen, Erärten, Formen, Kalandrieren, Walzen, Gießen, Blasformen, Spritzen, Formpressen, Mischen, Vernetzen, Weiterpolymerisieren, Kettenverlängern, Extrudieren, Coextrudieren, Verstrecken, Faserherstellung, Färben, Pigmentieren, Mahlen, Suspendieren, Emulgieren, Beschichten umfasst.

## Revendications

1. Procédé permettant de préserver la solidité des couleurs de compositions de polyuréthane thermoplastique, lequel procédé comprend l'incorporation dans une composition de polyuréthane thermoplastique, par extrusion réalisée à une température entre 140 et 250°C, d'une quantité de 0,2 à 5,1 % en poids, par rapport au poids total de la composition de polyuréthane thermoplastique, d'un mélange d'un absorbeur de lumière ultraviolette et d'un composé contenant au moins un groupement nitroxyle de formule I 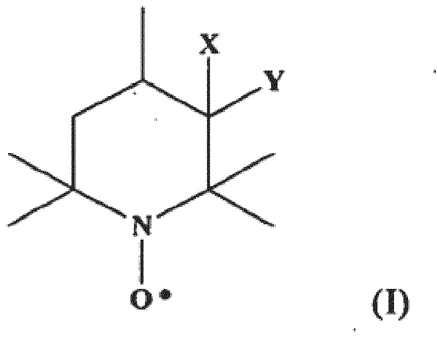 dans laquelle X et Y représentent H ou bien forment ensemble une double liaison à l'oxygène,
la quantité étant efficace pour produire un changement de couleur mesuré par delta E de moins de 5 après une exposition au xénon de 2 500 kJ conformément à la méthode d'essai SAE J 1960.

2. Procédé selon la revendication 1, dans lequel la composition de polyuréthane thermoplastique présente un changement de couleur mesuré par delta E de moins de 3 après une exposition au xénon de 1 250 kJ conformément à la méthode d'essai SAE J 1885.

3. Procédé selon la revendication 1, dans lequel l'absorbeur d'UV est présent à raison de 0,1 à 5 % en poids par rapport au poids total de la composition de polyuréthane thermoplastique et est choisi dans le groupe constitué par les 2-(2-hydroxyphényl)-2H-benzotriazoles, les tris-aryl-o-hydroxyphényl-s-triazines, les 2-hydroxybenzophénones, les formamidines et les oxanilides,
et le composé contenant au moins un groupement nitroxyle de formule I est présent à raison de 0,1 à 5 % en poids par rapport au poids total de la composition de polyuréthane thermoplastique.

4. Procédé selon la revendication 3, dans lequel la quantité totale d'absorbeur d'UV et de composé contenant au moins un groupement nitroxyle de formule I ensemble se monte à une valeur de 0,2 à 2 % en poids par rapport au poids total de la composition de polyuréthane thermoplastique.

5. Procédé selon la revendication 1, dans lequel le composé contenant au moins un groupement nitroxyle de formule I est choisi dans le groupe constitué par les composés de formules A à F 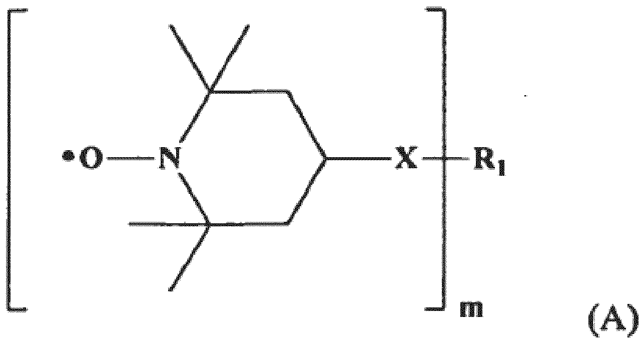 X représente une liaison directe, un atome d'oxygène ou
un groupe 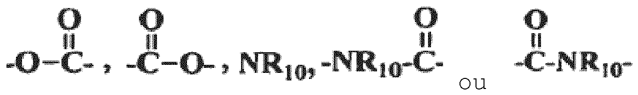 m est égal à 1, 2, 3 ou 4 et
lorsque m est égal à 1
R₁ représente un atome d'hydrogène ou un groupe alkyle de 1-18 atomes de carbone, alcényle de 2-18 atomes de carbone, alcynyle de 2-18 atomes de carbone, cycloalkyle de 5 à 12 atomes de carbone, ledit groupe alkyle, alcényle, alcynyle ou cycloalkyle portant un ou plusieurs substituants parmi OR₃, phényle, NR₃R₃', COOR₃, COOM⁺, CONR₃R₃' ;
alkyle de 2 à 18 atomes de carbone portant un substituant oxirane ;
aryle de 6 à 12 atomes de carbone, ledit groupe aryle portant un à quatre substituants alkyle de 1 à 4 atomes de carbone, OR₃, NR₃R₃', COOR₃, COOM⁺, CONR₃R₃' ;
alkyle de 2 à 18 atomes de carbone, alcényle de 3-18 atomes de carbone, alcynyle de 3-18 atomes de carbone ou cycloalkyle de 5 à 12 atomes de carbone interrompu une ou plusieurs fois par un ou plusieurs groupes X tels que définis ci-dessus, ledit groupe alkyle, alcényle, alcynyle ou cycloalkyle interrompu portant un ou plusieurs substituants parmi OR₃, phényle, NR₃R₃', COOR₃, COOM⁺, CONR₃R₃' ;
où R₃ et R₃' représentent, indépendamment l'un de l'autre, un atome d'hydrogène ou un groupe alkyle de 1 à 18 atomes de carbone, alkyle de 1 à 18 atomes de carbone interrompu une ou plusieurs fois par un atome d'oxygène, cycloalkyle de 5 à 12 atomes de carbone, aryle de 6 à 12 atomes de carbone, ledit groupe aryle portant un à quatre substituants alkyle de 1 à 4 atomes de carbone, aralkyle de 7-12 atomes de carbone, ou alkylcarbonyle de 2 à 18 atomes de carbone, cycloalkyl-carbonyle de 6 à 13 atomes de carbone, arylcarbonyle de 7 à 13 atomes de carbone, ledit groupe aryle portant un à quatre substituants alkyle de 1 à 4 atomes de carbone, et M⁺ représente un ion métallique du 1er, 2ème ou 3ème groupe du tableau périodique ou représente Zn, Cu, Ni ou Co, ou M représente un groupe Nⁿ⁺(R₂)₄ où R₂ représente un groupe alkyle de 1 à 8 atomes de carbone ou benzyle;
lorsque m est 2,
R₁ représente un groupe alkylène de 1 à 12 atomes de carbone, alcénylène de 2 à 12 atomes de carbone, cycloalkylène de 5 à 12 atomes de carbone, aralkylène de 7 à 15 atomes de carbone ou arylène de 6 à 12 atomes de carbone, alkylène de 2 à 12 atomes de carbone interrompu une ou plusieurs fois par un ou plusieurs chaînons O, -NR₃-, -CONR₃-, -COO-,
et lorsque m est égal à 2 et X représente une liaison directe
R₁ représente -N(R₃)R₄N(R₃)- où R₄ représente un groupe alkylène de 2 à 18 atomes de carbone, cycloalkylène de 5 à 12 atomes de carbone, aralkylène de 8 à 15 atomes de carbone ou arylène de 6 à 12 atomes de carbone ou R₁ représente -COO- ou -NH-CO-NH- ;
lorsque m est égal à 3,
R₂ représente un groupe alcanetriyle de 3 à 8 atomes de carbone ou benzènetriyle, et
lorsque m est égal à 4,
R₂ représente un groupe alcanetétrayle de 5 à 8 atomes de carbone ou benzènetétrayle : 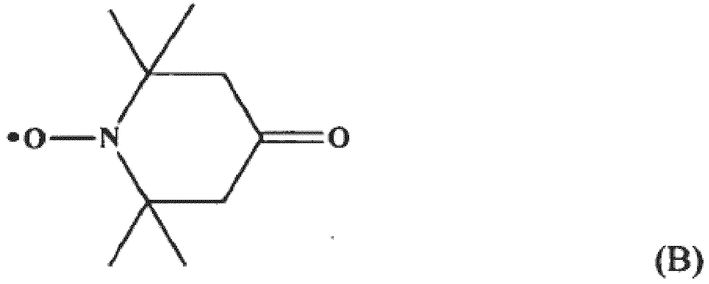 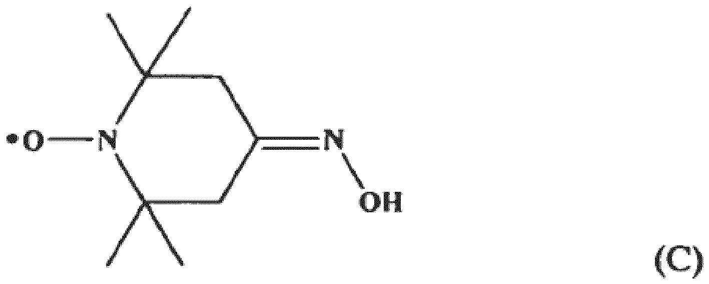 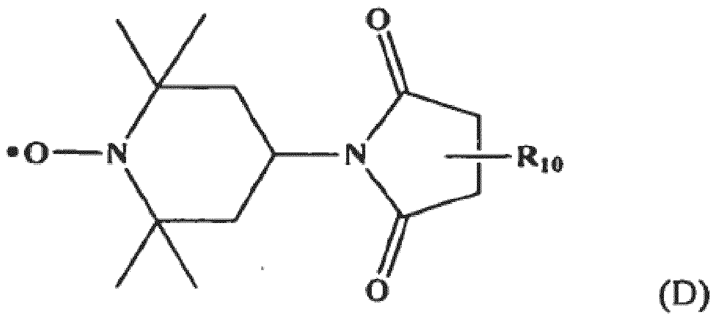 R₁₀ représente un atome d'hydrogène ou un groupe alkyle de 1 à 18 atomes de carbone, cycloalkyle de 5 à 12 atomes de carbone, aralkyle de 7 à 15 atomes de carbone, alcanoyle de 2 à 18 atomes de carbone, alcénoyle de 3 à 5 atomes de carbone ou benzoyle : 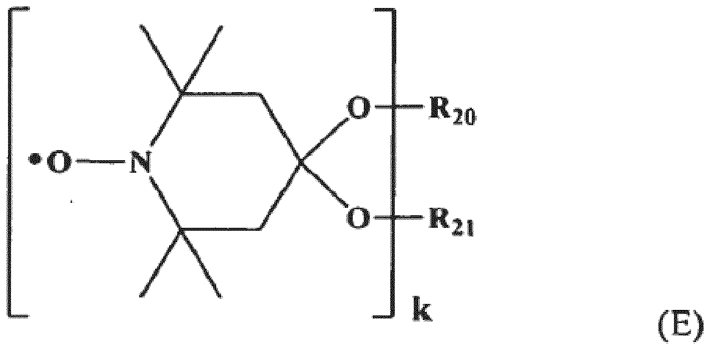 dans laquelle k est égal à 1 ou à 2,
lorsque k est égal à 1,
R₂₀ et R₂₁ représentent indépendamment un groupe alkyle de 1 à 12 atomes de carbone, alcényle de 2 à 12 atomes de carbone ou aralkyle de 7 à 15 atomes de carbone, ou R₂₀ et R₂₁ forment ensemble un groupe alkylène de 2 à 8 atomes de carbone ou ledit groupe alkylène portant un substituant hydroxyle, ou forment un groupe acyloxy-alkylène de 4 à 22 atomes de carbone, ou
lorsque k est 2,
R₂₀ et R₂₁ forment ensemble (-CH₂)₂C(CH₂-)₂ : 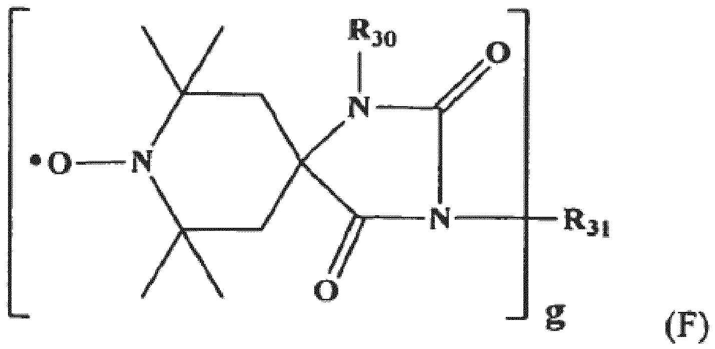 R₃₀ représente un atome d'hydrogène ou un groupe alkyle de 1 à 18 atomes de carbone, benzyle, glycidyle ou alcoxyalkyle de 2 à 6 atomes de carbone,
g est égal à 1 ou à 2,
lorsque g est égal à 1, R₃₁ représente un atome d'hydrogène ou un groupe alkyle de 1 à 18 atomes de carbone, alcényle de 2-18 atomes de carbone, propargyle, glycidyle, alkyle de 2 à 50 atomes de carbone interrompu par un à vingt atomes d'oxygène, ledit groupe alkyle portant un à dix substituants hydroxyle ou étant à la fois interrompu par lesdits atomes d'oxygène et substitué par lesdits groupes hydroxyle, ou
R₃₁ représente un groupe alkyle de 1 à 4 atomes de carbone portant un substituant carboxy ou -COOZ dans lequel Z représente un atome d'hydrogène ou un groupe alkyle de 1 à 4 atomes de carbone ou phényle, ou bien où Z représente ledit groupe alkyle portant un substituant - (COO⁻)ₙMⁿ⁺ où n est égal à 1-3 et M représente un ion métallique du 1er, 2ème ou 3ème groupe du tableau périodique ou représente Zn, Cu, Ni ou Co, ou M représente un groupe Nⁿ⁺(R₂)₄ où R₂ représente un groupe alkyle de 1 à 8 atomes de carbone ou benzyle,
lorsque g est égal à 2, R₃₁ représente un groupe alkylène de 1 à 12 atomes de carbone, alcénylène de 4 à 12 atomes de carbone, xylylène ou alkylène de 1 à 50 atomes de carbone interrompu par un à vingt atomes d'oxygène, portant un à dix substituants hydroxyle ou étant à la fois interrompu par lesdits atomes d'oxygène et substitué par lesdits groupes hydroxyle.

6. Procédé selon la revendication 5 dans lequel le composé contenant au moins un groupement nitroxyle de formule I est choisi dans le groupe constitué par les composés de formules A, B, C et D,
dans lesquelles, dans la formule A
X représente un atome d'oxygène ou un groupe 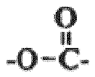 ou 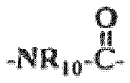 m est égal à 1 ou 2 et
lorsque m est égal à 1
R₁ représente un atome d'hydrogène ou un groupe alkyle de 1 à 18 atomes de carbone, alcényle de 2-18 atomes de carbone, ledit groupe alkyle ou alcényle portant un ou plusieurs substituants parmi OR₃, COOR₃ ou CONR₃R_{3'} ; alkyle de 3 à 12 atomes de carbone portant un substituant oxirane ;
alkyle de 2 à 18 atomes de carbone interrompu une ou plusieurs fois par un ou plusieurs atomes d'oxygène ou
groupes 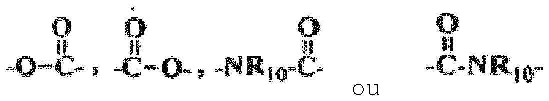 ou ledit groupe alkyle interrompu portant un ou plusieurs substituants parmi OR₃, COOR₃, CONR₃R₃';
lorsque m est égal à 2,
R₁ représente un groupe alkylène de 1 à 12 atomes de carbone, alkylène de 2 à 12 atomes de carbone interrompu une ou plusieurs fois par un ou plusieurs chaînons O, -CONR₃-, -COO-, et/ou portant un ou plusieurs substituants OR₃.

7. Procédé selon la revendication 1 dans lequel la composition de polyuréthane thermoplastique comprend un polyuréthane thermoplastique aromatique.

8. Procédé selon la revendication 1 qui comprend aussi l'addition d'au moins un pigment ou colorant.

9. Procédé selon la revendication 1 qui comprend aussi l'addition d'au moins un additif choisi dans le groupe constitué par les antioxydants et les stabilisants à la lumière de type amine à empêchement stérique de type N-H, N-alkyle, N-OR, N-acyle et N-OH.

10. Procédé selon la revendication 1 dans lequel l'extrusion est réalisée à une température entre 170 et 220°C.

11. Procédé selon la revendication 1 dans lequel la composition de polyuréthane est soumise à une étape opératoire supplémentaire après l'addition du mélange d'un absorbeur de lumière ultraviolette et d'un composé contenant au moins un groupement nitroxyle de formule I.

12. Procédé selon la revendication 11, dans lequel l'étape opératoire supplémentaire est effectuée à des températures égales ou supérieures à 45°C.

13. Procédé selon la revendication 11 dans lequel l'étape opératoire supplémentaire comprend une étape choisie dans le groupe constitué par un séchage, une vulcanisation, un chauffage, un durcissement, un moulage, un calandrage, un laminage, un coulage, un moulage par soufflage, une pulvérisation, un moulage par compression, un mélangeage, une réticulation, une autre polymérisation, un allongement de chaîne, une extrusion, une co-extrusion, un étirage, une production de fibres, une teinture, une pigmentation, un broyage, une suspension, une émulsification, un revêtement.
